# EUROPEAN PATENT SPECIFICATION

(11) **EP 1 903 532 B1**
(45) Date of publication and mention of the grant of the patent: **06.04.2011**
(21) Application number: 07004018.3
(22) Date of filing: 27.02.2007
(51) Int. Cl.: G08G 1/09

(54) **Method and apparatus for decoding traffic information and method for encoding traffic information**
Verfahren und Vorrichtung zur Dekodierung von Verkehrsinformationen und Verfahren zur Kodierung von Verkehrsinformationen
Procédé et appareil pour le décodage d'informations de trafic et procédé d'encodage d'informations de trafic

(30) Priority: 25.09.2006 KR 20060092962
(43) Date of publication of application: 26.03.2008
(73) Proprietor: LG Electronics Inc., Seoul 150-721 (KR)
(72) Inventor: Lee, Jun Jeong, Seo-gu Incheon (KR); Woo, Sung Ho, Ilsan-gu Goyang-si Gyeonggi-do (KR); Kim, Seon Hui, Mapo-gu Seoul (KR)
(74) Representative: Katérle, Axel

(56) References cited:
- EP-A- 1 081 668
- DE-A1- 19 703 609

## Description

### BACKGROUND OF THE INVENTION

### Field of the Invention

The present invention relates to a method and apparatus for providing or receiving traffic information, and more particularly, to a method and apparatus for providing or receiving traffic information using version information indicating whether new information is included or not.

DE 197 03 609 describes a traffic information broadcast system.

### Discussion of the Related Art

As digital signal processing technologies and communication technologies have been increasingly developed and combined, radio-broadcast or TV-broadcast technology has been rapidly developed from analog broadcast technology to digital broadcast technology. In addition, data broadcast technology for broadcasting information related to daily life or broadcast programs through the digital broadcast technology has been developed.

Specifically, with the widespread use of vehicles throughout the world, the number of vehicles in urban or downtown areas, the number of people commuting to work, and the number of vehicles in rural districts are also rapidly increasing. As a result, the necessity of informing the drivers of the vehicles of traffic information is also increased.

According to the related art, radio broadcast programs from various radio broadcast stations provide the drivers and other users with such traffic information. However, this has a disadvantage in that such radio broadcast programs can only provide the drivers with the traffic information at specific times and that the drivers must tune into the programs at those specified times to obtain the traffic information. Thus, according to the related art, the drivers cannot listen to the traffic information offered by the radio broadcast programs at any time.

Furthermore, generally, the traffic states or traffic information is constantly changing in real time. As a result, the above-mentioned radio broadcast stations cannot provide the drivers with correct traffic information varying with time.

In order to address the above-mentioned problems, a variety of enterprises currently provide their subscribers with traffic information in real time through the subscribers' terminals. However, if a variety of terminals manufactured by different enterprises and having different functions are used, they must be able to commonly detect and analyze traffic information received via different digital broadcast channels and provide the users with the traffic information. Accordingly, a unified communication standard for transmitting/receiving the same signals (e.g., traffic information) between information providers and information users and analyzing the same signals is needed, which is not available in the related art.

In addition, the enterprises for providing the traffic information transmit the traffic information at specific times set by the enterprises. However, a time necessary for updating the traffic information is often longer than the transmission time of the traffic information. Accordingly, since a receiver for receiving the traffic information may decode the traffic information which may not have been updated, power and other resources may be unnecessarily consumed according to the related art. Moreover, each time the user's terminal receives traffic information, the terminal automatically and always decodes all the received traffic information, which takes time and resources.

### SUMMARY OF THE INVENTION

Accordingly, the present invention is directed to a method and apparatus for decoding traffic information and a method and apparatus for encoding and providing traffic information that substantially obviate one or more problems due to limitations and disadvantages of the related art.

An object of the present invention is to provide a method for receiving traffic information which can be decoded only when traffic information included in a transport frame is different from information previously received.

Another object of the present invention is to provide an apparatus for receiving traffic information which can be decoded only when traffic information included in a transport frame is different from information previously received.

Another object of the present invention is to provide a method and apparatus for providing traffic information including information different from traffic information previously received.

Another object of the present invention is to provide certain indication information along with traffic information to a terminal, wherein the indication information indicates if that traffic information is different from previously provided traffic information, so that the terminal can determine if the newly sent traffic information should be decoded and processed.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for receiving traffic information according to an aspect of the present invention includes: receiving the traffic information; determining whether version information of the received traffic information is identical to version information of previously stored traffic information; and decoding the received traffic information if the version information of the received traffic information is not identical to the version information of the previously stored traffic information.

In another aspect of the present invention, there is provided a terminal for receiving traffic information comprising a broadcast module configured to receive the traffic information; a storage unit configured to store the received traffic information; a decoder configured to decode the traffic information; and a control unit configured to receive the traffic information via the broadcast module, determine whether version information of the received traffic information is identical to version information of previously stored traffic information, and decode the received traffic information if the version information of the received traffic information is not identical to the version information of the previously stored traffic information.

In another aspect of the present invention, there is provided a method for providing traffic information comprising generating at least one traffic information message; generating at least one service component frame including the at least one traffic information message; and generating traffic information including a transport frame including the at least one service component frame, wherein the traffic information includes version information.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a view illustrating a network for providing traffic information according to an embodiment of the present invention;

FIG. 2 is a view illustrating a general frame structure of traffic information which is wirelessly transmitted or received;

FIG. 3 is a view illustrating a frame structure of traffic information including version information according to an embodiment of the present invention;

FIG. 4 is a view illustrating a frame structure of traffic information including version information and index information according to another embodiment of the present invention;

FIG. 5 is a block diagram illustrating the internal configuration of an apparatus (or terminal) for decoding traffic information according to an embodiment of the present invention;

FIG. 6 is a flowchart illustrating a method for decoding traffic information according to an embodiment of the present invention; and

FIG. 7 is a flowchart illustrating a method for decoding traffic information according to another embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

A road searching service and a traffic information providing service according to the present invention can be applied to a variety of digital broadcast standards.

Representative examples of the digital broadcast standards are, but not limited to, a European Digital Audio Broadcasting (DAB) service based on the Eureka-147 [ETSI EN 300 401] standard, a Digital Video Broadcasting-Terrestrial (DVB-T) service of Europe, a Digital Video Broadcasting-Handheld (DVB-H) service of Europe, a Media Forward Link Only (FLO) service of the United States, and a Digital Multimedia Broadcasting (DMB) service of the Republic of Korea.

The DMB service generally is classified into a Terrestrial Digital Multimedia Broadcasting (T-DMB) service based on the Eureka-147 standard and a Satellite Digital Multimedia Broadcasting (S-DMB) service using satellite communication.

Also, the traffic information providing service according to the present invention can be applied to the Internet, e.g., a Wi-Fi or Wireless Broadband Internet (Wibro), etc.

Preferably, the term "traffic status" is indicative of information associated with the traffic, e.g., information on a traffic accident, an unexpected accident, a public transportation status, a congestion and travel time information (CTT) status, an emergency event, and/or a road transportation status, etc. However, it is not limited to the above-mentioned meanings and can be applied to other similar examples. For the convenience of description, a specific term "Transport Protocol Expert Group (TPEG)" is exemplarily used as the above-mentioned traffic information (traffic status information).

Preferably, the term "traffic flow status" is indicative of a traffic-flow status of roads, for example, a congestion of roads and travel time of transport means (e.g., car) on the roads. However, it is not limited to the above-mentioned meaning and can be applied to other similar meanings.

Preferably, the term "section" or "link" is indicative of a specific area of roads or a road segment which starts and ends at junctions and has no junction in between. However, it is not limited to the above-mentioned meaning and can be applied to other similar meanings.

Preferably, the term "version information" is indicative of information for identifying the traffic information. The version information indicates whether received traffic information is different from traffic information previously received, by changing or sequentially increasing an identification number from a first identification number upon updating the traffic information. The version information can be a parameter or flag having a value, such that the value of this parameter indicates whether or not the currently received (or sent) traffic information is different from the previously received (or sent) traffic information. The version information may be included in a transport frame or a service component frame. In addition, the version information may be included in a message management container included in a TPEG message.

Preferably, the term "index information" is indicative of information for identifying links included in one service component frame. For example, in a case of the CTT, TPEG messages of 256 links are included in one service component frame. The index information can be given to the traffic information messages of the 256 links included in one service component frame as an identification number. However, it is not limited to the above-mentioned meaning and can be applied to other similar meanings.

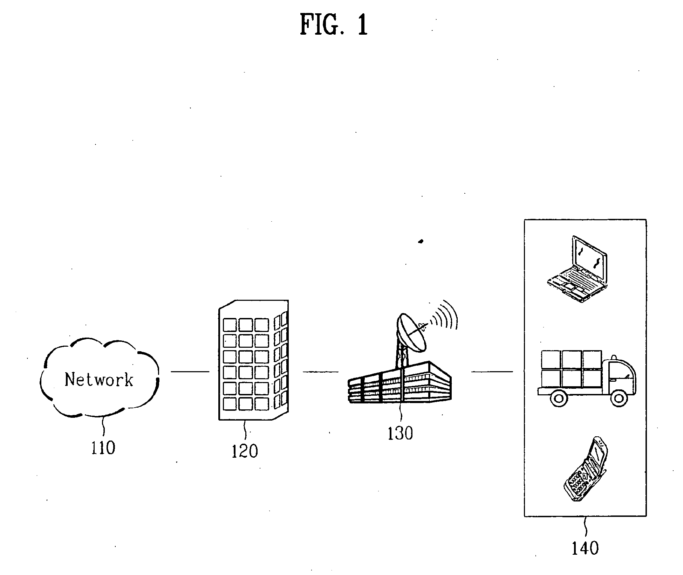

FIG. 1 is a view illustrating a digital multimedia broadcast system for providing traffic information according to an embodiment of the present invention. A method for providing traffic information using radio frequency (RF) signals will hereinafter be described with reference to FIG. 1.

Referring to FIG. 1, the digital multimedia broadcast system includes a network 110 for collecting contents related to traffic information, a traffic information provision server 120 for providing the collected contents, a broadcast center 130, and a terminal 140, all operatively coupled and configured.

The traffic information provision server 120 of a broadcast station reconstructs a variety of traffic information received from other servers via a variety of paths such as an administrator network or the network 110, and transmits the received traffic information to traffic information receivers of a variety of terminals 140 such as a mobile phone, a vehicle, a personal digital assistant (PDA), or other hand-held terminals via a transmitter of the broadcast center 130.

The above-mentioned terminal 140 may further include a navigator or a computer such as a laptop computer, but is not limited to the above-mentioned example, and can be applied to other examples. In this case, the traffic information provision server 120 may use a data channel of a digital broadcast service as a traffic information transmission path, a wired/wireless Internet, a broadband wireless medium such as a Wi-Fi or a Wibro, or other Internets based on wired cables. Specifically, in a case of using a data service for a DMB service, the traffic information provision server 120 may also use a transparent data channel (TDC) protocol or multimedia object transport (MOT) protocol of a digital broadcast medium.

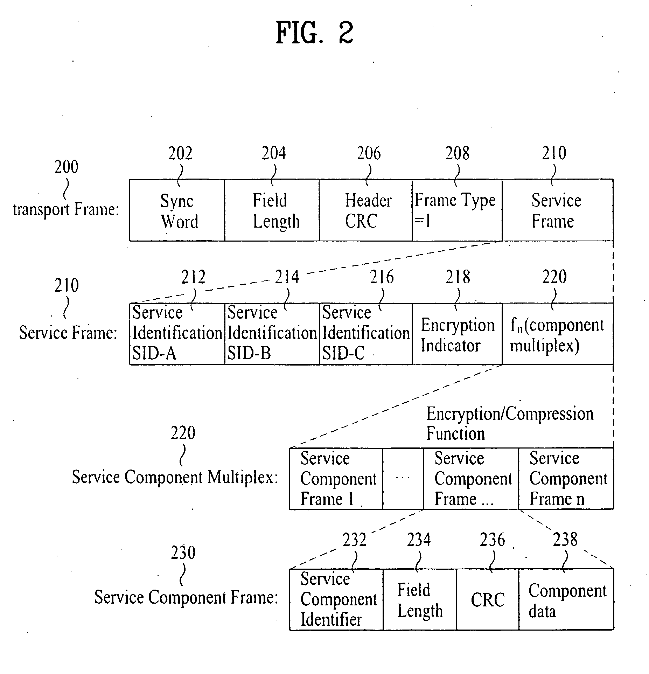

FIG. 2 is a view illustrating a general structure of a transport frame carrying traffic information, which is wirelessly transmitted or received.

As shown in FIG. 2, a transport frame 200 includes a "Sync Word" field 202, a "Field Length" field 204, a "Header CRC" field 206, a "Frame Type" field 208 and a "Service Frame" field 210.

The "Sync Word" field (202) generally has 2 bytes and indicates a synchronization language. The "Field Length" field 204 generally has 2 bytes and indicates the number of bytes allocated to the "Service Frame" field 210. The "Header CRC" field 206 generally has 2 bytes and includes information used for correcting errors. The "Frame Type" field 208 generally has 1 byte and indicates the contents of the service frame. The transport frame 200 includes one "Service Frame" field 210. The transport frame 200 is used by a service provider and provides one service for supporting a variety of applications. The "Service Frame" field 210 includes service information such as service identification information and encryption information.

The "Service Frame" field 210 includes, for example, a "SID-A" field 212, a "SID-B" field 214, "SID-C" field 216, an "Encryption Indicator" field 218 and a "Component Multiplex" field 220.

The combination of the identification information of the "SID-A" field 212, the "SID-B" field 214 and the "SID-C" field 216" generally has a specific value. The "Encryption Indicator" field 218 generally has 1 byte. For instance, if the value of the "Encryption Indicator" field 218 is "00 hex", it is indicated that data included in the "Component Multiplex" field 220 is not encrypted. If the "Encryption Indicator" field 218 has the other values, the "Encryption Indicator" field 218 indicates a data encryption and compression mechanism which can be used in data included in the next "Component Multiplex" field 220.

The "Component Multiplex" field 220 is a set of at least one service component frame, and the type or order thereof is determined by the service provider. The "Component Multiplex" field 220 is changed by an indication method of the "Encryption Indicator" field 218. As described above, when the value of the "Encryption Indicator" field 218 is "00 hex", the multiplex is maintained without change.

The "Service Component Frame" field 230 included in the "Component Multiplex" field 220 includes a "Service Component Identifier" field 232, a "Field Length" field 234, a "CRC" field 236 and a "Component Data" field 238.

The "Service Component Identifier" field 232 generally has 1 byte, and the service component identifier in the field 232 having a value of "0" is generally reserved for a service network information (SNI) application. The "Field Length" field 234 generally has 2 bytes and indicates the number of bytes allocated to the "Component Data" field 238. The "CRC" field 236 generally has 2 bytes and includes information used for correcting errors.

The SNI application is used for identifying whether next component data is CTT, public transport information (PTI) or road traffic message (RTM).

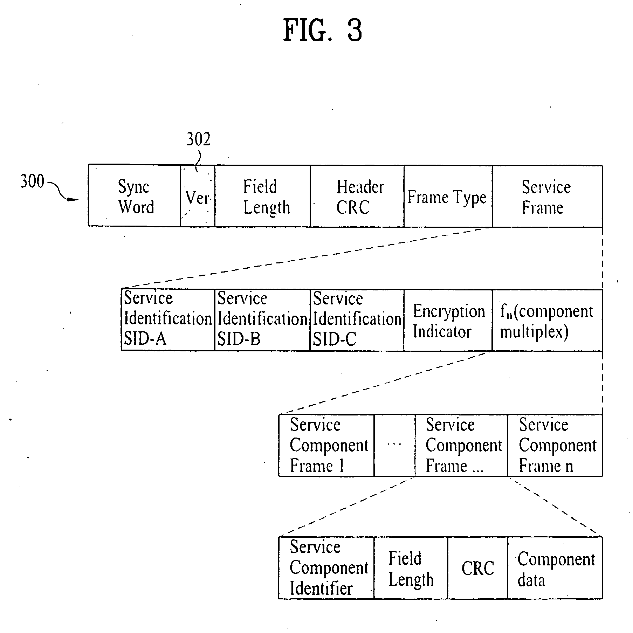

FIG. 3 is a view illustrating a frame structure of traffic information including version information according to an embodiment of the present invention.

As shown in FIG. 3, a transport frame 300 carrying the traffic information and version information according to the present invention includes a "Sync Word" field, a "Ver" (version) field 302, a "Field Length" field, a "Header CRC" field, a "Frame Type" field and a "Service Frame" field. Except for the "Ver" field 302, the other fields of the transport frame 300 are identical to (or similar to) those fields discussed in the transport frame 200 of FIG. 2.

In the present invention, the "Ver" field 302 stores therein version information, which can be represented using a version number. Preferably, the version number is a sequential number for differentiating consecutive service frames, but the version numbers do not need to be sequentially incremented or decremented. By comparing the version numbers, the version numbers (version information) can indicate whether or not data recorded in a service component included in the next service frame is different from data which is previously received/sent.

According to the present invention, a transmission terminal (e.g., the information server 120) for providing the traffic information using the transport frame changes the version information included in the "Ver" field 302 and provides the changed version information only when the changed traffic information is included, e.g., in the "Component Data" field. Then a reception terminal receives the transport frame including the traffic information and determines whether the received data is identical to data which is previously received using the version number. For example, the reception terminal stores the version number (in the field 302) included in a first received transport frame including traffic information, e.g., in the "Component Data" field. Then when a second transport frame including traffic information is received subsequently, the reception terminal compares the version number included in the second transport frame with the stored version number associated with the first transport frame. When both version numbers are identical to each other, it is determined that data (e.g., traffic information) included in the recently received service frame is identical to the data of the service frame which is previously received. That is, it is determined that the data included in the service frames have not changed. In contrast, when the version numbers are different from each other, it is determined that the data included in the service frames have changed.

As described above, according to the present invention it is possible to decode only the transport frame having the changed data stored therein, using the version information included in the "Ver" field 302 of the transport frame 300. Accordingly, since the data, which is included in the service component of the service component frame without change, is not parsed, it is possible to prevent power or a buffer memory capacity from being consumed for decoding unnecessary data.

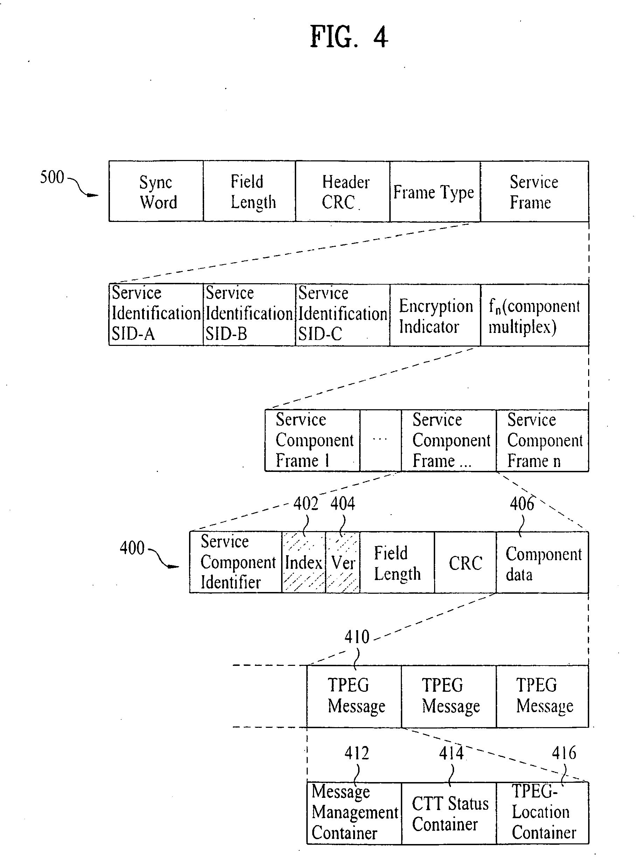

FIG. 4 is a view illustrating a frame structure of traffic information including version information and index information according to an embodiment of the present invention.

Referring to FIG. 4, a transport frame 500 according to this embodiment includes the fields 202, 204, 206, 208, 210 as shown in FIG. 2. However, at least one service component frame 400 of the transport frame 500 includes version information and index information.

More particularly, the service component frame 400 includes a "Service Component Identifier" field, a "Field Length" field, a "CRC" field and a "Component Data" field 406. In the present invention, the service component frame 400 further includes an "Index" field 402 and a "Ver" (version) field 404.

The "Component Data" field 406 included in the service component frame 400 includes at least one TPEG message 410.

When the TPEG message 410 includes the CTT, one TPEG message includes a "Message Management Container" field 412 including a component for managing the message, a "CTT Status Container" field 414 including the CTT status, and a "TPEG-Location Container" field 416 including location information corresponding to the CTT status. The "Component Data" field of FIG. 3 can have the same structure as the "Component Data" field 406 of FIG. 4.

The CTT depends on location information, and the location information included in the "TPEG-Location Container" field 416 is defined by referring to a location using a coordinate system or by referring to a location using a predefined node link ID. In the present invention, in a case where a whole country is divided into links and node link IDs are given to the links, it is possible to prevent the links from being sporadically included in one service component. For instance, in the Republic of Korea, the whole country is divided into about 65,000 links. However, one service component includes only information on at most 255 links. Indexes may be given to the links included in one service component. Index 1 is given to link IDs of 1 to 255 and Index 2 is given to link IDs of 256 to 510.

Accordingly, the service component frame 400 may include the "Index" field 402 including the index information. The index information included in the "Index" field 402 indicates which link (among the possible links) is included in the corresponding service component frame 400.

The transmission terminal (e.g., a server or traffic center) for providing traffic information includes the traffic information, such as the CTT, related to the node links of the index in one service component according to the index, and transmits the service component to one or more reception terminals. Then, upon receipt of the service component in the transport frame, the reception terminal for receiving the traffic information may determine which link information is included in the received service component using the index information included in the "Index" field 402.

The service component frame 400 may further include the "Ver" field 404. The "Ver" field 404 preferably indicates a version number, but can store therein version information represented in different ways. The version number preferably is a sequential number for differentiating consecutive service component frames. The version number indicates whether data recorded in a service component included in the next service frame is different from data which is previously received or not.

At a transmission side, the transmission terminal (e.g., server or traffic center) for providing the traffic information changes the version number (e.g., by incrementing it by a certain amount) and provides the changed version number, only when a changed TPEG message is included. Then, at a receiving side, the reception terminal for receiving the traffic information can determine whether the received data is identical to the data which is previously received using the version number included in the "Ver" field 404.

Hereinafter, an apparatus and method for receiving the transmitted traffic information using the above-mentioned frame structures according to the present invention will be described in detail.

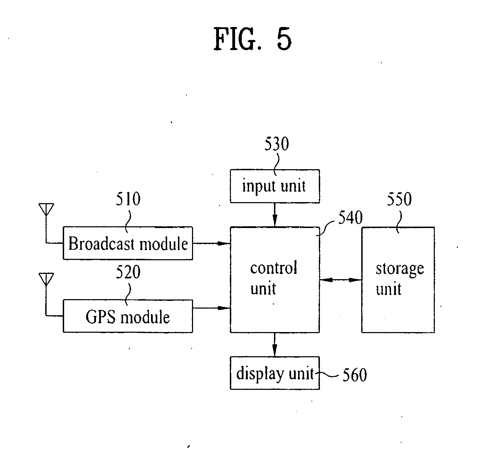

FIG. 5 is a block diagram illustrating the internal configuration of an apparatus for receiving and decoding traffic information according to an embodiment of the present invention. More specifically, FIG. 5 schematically illustrates the internal configuration of a terminal for receiving the traffic information transmitted from the traffic information provision server 120, according to an embodiment of the present invention. The terminal can be a mobile terminal.

As shown in FIG. 5, the terminal using the received traffic information includes a broadcast module 510, a GPS module 520, an input unit 530, a control unit 540, a storage unit 550, and one or more display units 560. All the components of the terminal are operatively coupled and configured.

The broadcast module 510 receives a broadcast signal transmitted from the broadcast center via a broadcast channel. The broadcast module 510 may be a portion of a wireless transmission/reception unit including a transmission/reception circuit for wirelessly transmitting/receiving sound and control information to/from a base station.

The GPS module 520 receives satellite signals transmitted from a plurality of low-earth-orbit satellites and recognizes current location information (e.g., a longitude, a latitude, or an altitude).

The input unit 530 includes a plurality of key buttons for inputting numerals such as telephone numbers, generates key data when a user presses a predetermined key, and outputs the generated key data to the control unit 540. The input unit 530 may include a keypad, a jog shuttle, a point stick, a touch screen, etc.

The control unit 540 is a key portion of the terminal and controls the whole operation of the terminal. The control unit 540 can include an arithmetic and logic unit, a register, a program counter, a command decoder and a control circuit and properly controls the whole operation of the terminal.

The storage unit 550 stores program(s) for controlling the whole operation of the terminal. Data which is input/output when the operations of the terminal are performed by the control unit 540 is stored in a predetermined area.

The display unit 560 can include a liquid crystal display unit for displaying a variety of information and displays the current status of the terminal such that the user may perform proper control. On the liquid crystal display screen, a variety of information such as a power status, the strength of a received electromagnetic wave, a date and time, a current mode, or other user information can be displayed. The user can confirm and control the status of the terminal of FIG. 5 by displaying such information to the user.

Hereinafter, the functions of the components of the present invention will be described in detail. The broadcast module 510 receives traffic information (e.g., a transport frame of FIG. 3 or 4) via a broadcast channel and transmits the received traffic information to the control unit 540. For example, the broadcast module 510 outputs a traffic information signal modulated in synchronization with a signal band for providing the traffic information to a demodulator, and the demodulator in the terminal demodulates the modulated traffic information signal and outputs the demodulated traffic information signal to the control unit 540. The control unit 540 acquires a variety of traffic information by decoding the demodulated traffic information signal. The storage unit 550 stores an electronic map including information on the links and the nodes and a variety of graphic information. The storage unit 550 also stores the received traffic information during a predetermined period. The control unit 540 controls the screen output based on the input information of the user input by the input unit 530, the current location recognized by the GPS module 520 and the traffic information acquired by the broadcast module 510. The display unit 560 displays an image using a drive signal according to a graphic transmitted from the control unit 540.

The broadcast module 510 receives the traffic information signal, which is transmitted from the traffic information provision server via the broadcast center, tunes the received signal, demodulates the tuned signal using a predetermined method, and outputs the demodulated signal. Here, the predetermined method for demodulating the tuned signal can be any existing demodulation method.

Then, the control unit 540 decodes the demodulated signal, analyzes the TPEG messages in the traffic information (transport frame), and controls the image display of the display unit 560 using a control signal and/or necessary information according to the message contents. When the demodulated signal is the traffic information, a TPEG decoder for decoding the traffic information may be further included or the control unit 540 may include a decoding function. In the present invention, for convenience of description, for example, a case where the control unit 540 has the decoding function will be described.

The control unit 540 according to an embodiment of the present invention reads the version number included in the traffic information and determines whether the read version number is identical to that of traffic information previously received and stored based on a comparison of the version numbers. The control unit 540 can determine whether the received traffic information is to be decoded or not, according to the result of determination. For example, when it is determined that the version numbers are not identical to each other, the control unit 540 determines that the recently received traffic information and the previously stored traffic information are not identical to each other. Accordingly, the received traffic information is decoded since it is different from the previously stored traffic information. As described above, the version number (or version information represented in a different way) is provided in the "Ver" field 302 included in the transport frame 300 of FIG. 3.

According to another embodiment, the control unit 540 parses the received traffic information and acquires data corresponding to the version number included in the "Ver" field 404 and the index number included in the "Index" field 402 of the service component frame 400. The TPEG message 410 included in the service component frame 400 may be CTT. The control unit 540 determines whether, among the plurality of service component frames included in the stored traffic information (transport frame 500), the version number of one of the previously stored service component frame having the index number identical to the acquired index number (i.e., the index number acquired from the "Index" field 402 of the received service component frame) is identical to the version number included in the corresponding service component frame of the received traffic information. The control unit 540 can determine whether the service component frame of the received traffic information should be decoded or not, according to the result of determination. For example, when it is determined that both version numbers are not identical to each other, it is determined that the TPEG messages included in both service component frames are not identical to each other. Accordingly, the service component frame of the received traffic information is decoded. As described above, the fields indicating the index number and the version number are included in the service component frame 400 of the transport frame 500.

Then, as described above, the control unit 540 decodes the traffic information selected using the version number or the index number, analyzes the TPEG messages in the decoded traffic information, and controls the image display of the display unit 560 using a control signal and/or necessary information according to the message contents. When the terminal shown in FIG. 5 includes sound output means such as a speaker, the TPEG message requested by the user may be output by sounds through the sound output means.

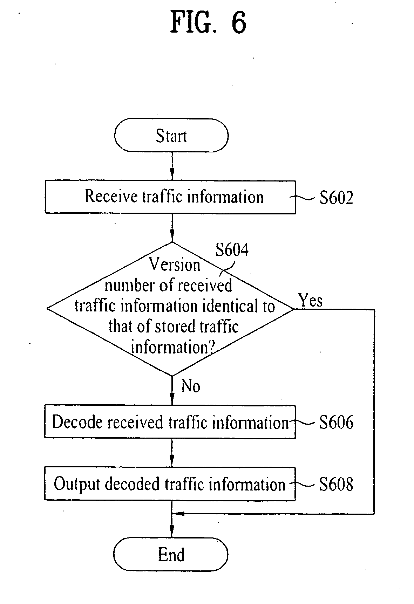

FIG. 6 is a flowchart illustrating a method for decoding traffic information according to an embodiment of the present invention. The method of FIG. 6 can be implemented in the system of FIGS. 1 and 5 or in other suitable system using the transport frame of FIG. 3. But this method may be performed using the transport frame of FIG. 4.

Referring to FIG. 6, first, the control unit 540 receives traffic information (e.g., a second transport frame 300) via the broadcast module 510, e.g., from the traffic information server 120 (S602).

The control unit 540 determines whether the version number of the received traffic information is identical to that of stored traffic information (e.g., a first transport frame 300 previously received) by comparing the version of the received traffic information with the version number of the stored traffic information (S604). The version number is included in the "Ver" field 302 included in the transport frame 300 of the received or stored traffic information. However, the method of FIG. 6 may be performed using the version number included in the "Ver" field 404 of the service component frame 400 in FIG. 4.

If it is determined that the version number of the received traffic information (second transport frame) is identical to that of the stored traffic information (first transport frame) in step S604, the control unit 540 does not parse/decode the received traffic information (second transport frame) because there is no change to the traffic information. Then the control unit 540 can discard or eliminate the received traffic information (second transport frame).

In contrast, if it is determined that the version number of the received traffic information is not identical to that of the stored traffic information in step S604, the control unit 540 decodes the received traffic information (S606). When the version numbers are not identical to each other, the received traffic information and the stored traffic information are different from each other. Thus, the received transport frame is parsed and the traffic information included in the received transport frame is decoded.

The control unit 540 outputs the traffic information decoded in step S606 (S608). The control unit 540 can analyze the TPEG messages in the decoded traffic information and controls the image display of the display unit 560 using the control signal and/or the necessary information according to the message contents. When the sound output means is included, the TPEG message requested by the user may be output by sounds through the sound output means.

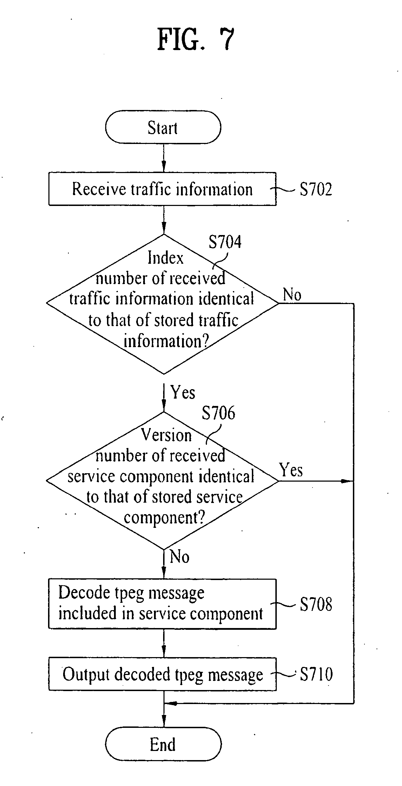

FIG. 7 is a flowchart illustrating a method for decoding traffic information according to another embodiment of the present invention. The method of FIG. 7 can be implemented in the system of FIGS. 1 and 5 or in other suitable system using the transport frame of FIG. 4.

Referring to FIG. 7, first, the control unit 540 receives traffic information (e.g., transport frame 500 of FIG. 4) via the broadcast module 510, e.g., from the traffic information server 120 (S702).

The control unit 540 determines whether the index number of the traffic information received in step S702 is identical to that of stored traffic information (S704). More specifically, the control unit 540 searches for, among the previously stored service component frames, a service component frame having an index number that is identical to the index number of the service component frame in the received traffic information, and if such stored service component frame is found at step S704, the version number of the found service component frame is compared with that of the received service component frame of the received traffic information at step S706. When the TPEG message included in the traffic information is CTT, the index number is used for differentiating the links included in one service component frame. The index number is defined in the "Index Field" 402 included in the service component frame.

As discussed above, if it is determined that the index number of the received traffic information is identical to that of the stored traffic information in step S704, the control unit 540 determines whether the version number included in the received service component frame is identical to that of the stored service component frame that is found in step S704 (S706). The version number indicates whether the TPEG message included in the service component frame 400 is changed or not and is defined in the "Ver" (version) field 404 included in the service component frame 400.

If it is determined that the version numbers are identical to each other in step S706, the control unit 540 does not parse/decode the received service component frame and eliminates the received service component frame.

In contrast, if it is determined that the version numbers are not identical to each other in step S706, the control unit 540 decodes the TPEG message included in the received service component frame (S708). When the version numbers are not identical to each other, the TPEG messages included in the respective service component frames are different from each other. Thus, the received service component frame is considered to have different traffic information and is thus parsed. The TPEG message included in the received service component frame is decoded.

The control unit 540 outputs the traffic information (e.g., TPEG message) decoded in step S708 (S710). The control unit 540 analyzes the decoded TPEG message and controls the image display of the display unit 560 using the control signal and/or the necessary information according to the message contents. If the sound output means is included in the terminal 140, the TPEG message requested by the user may be output by sounds through the sound output means.

According to the present invention, since traffic information, which is transmitted without any change, is not decoded by the receiving terminal and only the necessary (new or different) traffic information is decoded and provided to a user of the receiving terminal, it is possible to prevent power and other resources from being wasted due to decoding of unnecessary traffic information.

According to the present invention, it is possible to prevent a data processing speed from decreasing due to decoding of unnecessary traffic information.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A method for receiving traffic information, the method comprising:
receiving the traffic information including at least one service component frame;
extracting, from at least one service component frame included in previously stored traffic information, a service component frame including index information that is identical to index information of one of the at least one service component frame included in the received traffic information;
determining whether version information of the extracted service component frame is identical to version information of the service component frame with the index information identical to the extracted service component frame; and
decoding the service component frame with the index information identical to the extracted service component frame among the at least one service component frame included in the receive traffic information if the version information of the extracted service component frame is not identical to the version information of the service component frame with the index information identical to the extracted service component frame.

2. The method of claim 1, wherein the version information of the received traffic information or the previously stored traffic information is included in a transport frame of the received traffic information or the previously stored traffic information.

3. The method of claim 1, wherein the version information of the received traffic information or the previously stored traffic information is included in a service component frame of the received traffic information or the previously stored traffic information.

4. The method of claim 3, wherein the index information of the received traffic information or the previously stored traffic information is included in a service component frame of the received traffic information or the previously stored traffic information.

5. The method of claim 3, wherein the service component further includes at least one congestion and travel time information (CTT) message.

6. The method of claim 5, wherein the congestion and travel time information message includes location information corresponding to the CTT.

7. The method of claim 6, wherein the location information includes link information corresponding to index information.

8. A terminal for receiving traffic information, the terminal comprising:
a broadcast module (510) configured to receive the traffic information including at least one service component frame;
a storage unit (550) configured to store the received traffic information;
a decoder configured to decode the traffic information; and
a control unit (540) configured to receive the traffic information via the broadcast module (510), extract a service component frame, which includes index information that is identical to index information of one of the at least one service component frame included in the previously stored traffic information, determine whether version information of the extracted service component frame is identical to version information of the service component frame with the index information identical to the extracted service component frame, and decode the service component frame with the index information identical to the extracted service component frame among the at least one service component frame included in the received traffic information if the version information of the extracted service component frame is not identical to the version information of the service component frame with index information identical to the extracted service component frame.

9. The terminal of claim 8, wherein the version information of the received traffic information or the previously stored traffic information is included in a transport frame of the received traffic information or the previously stored traffic information.

10. The terminal of claim 8, wherein the version information of the received traffic information or the previously stored traffic information is included in a service component of the received traffic information or the previously stored traffic information.

11. The terminal of claim 10, wherein the index information of the received traffic information or the previously stored traffic information is included in the service component frame of the received traffic information or the previously stored traffic information.

12. The terminal of claim 10, wherein the service component frame includes at least one congestion and travel time information (CTT) message.

13. The terminal of claim 12, wherein the CTT message includes location information corresponding to the CTT.

14. The terminal of claim 13, wherein the location information includes link information corresponding to index information.

15. A method for providing traffic information, the method comprising:
generating at least one traffic information message;
generating at least one service component frame including the at least one traffic information message; and
generating traffic information including a transport frame including the at least one service component frame,
wherein each of the at least one service component frame includes version information indicating a version of the corresponding service component and index information indicating at least one link included in the corresponding service component frame.

16. The method of claim 15, wherein the version information is included in the transport frame.

17. The method of claim 15, wherein the each of the at least one service component frame includes a congestion and travel time information (CTT) message.

## Patentansprüche

1. Verfahren zum Empfangen von Verkehrsinformationen, wobei das Verfahren umfasst:
Empfangen der Verkehrsinformationen, die mindestens einen Dienstkomponentenrahmen enthalten;
Extrahieren eines Dienstkomponentenrahmens, der Indexinformationen enthält, die identisch zu Indexinformationen eines des mindestens einen Dienstkomponentenrahmens sind, der in den empfangenen Verkehrsinformationen enthalten ist, aus mindestens einem Dienstkomponentenrahmen, der in zuvor gespeicherten Verkehrsinformationen enthalten ist,
Bestimmen, ob Versionsinformationen des extrahierten Dienstkomponentenrahmens identisch sind zu Versionsinformationen des Dienstkomponentenrahmens, der die zu dem extrahierten Dienstkomponentenrahmen identischen Indexinformationen aufweist, und
Decodieren desjenigen Dienstkomponentenrahmens mit den Indexinformationen, die identisch zu dem extrahierten Dienstkomponentenrahmen sind, aus dem mindestens einen Dienstkomponentenrahmen, der in den empfangenen Verkehrsinformationen enthalten ist, falls die Versionsinformationen des extrahierten Dienstkomponentenrahmens nicht identisch zu den Versionsinformationen des Dienstkomponentenrahmens mit den Indexinformationen sind, die zu dem extrahierten Dienstkomponentenrahmen identisch sind.

2. Verfahren nach Anspruch 1, wobei die Versionsinformationen der empfangenen Verkehrsinformationen oder der zuvor gespeicherten Verkehrsinformationen in einem Transportrahmen der empfangenen Verkehrsinformationen oder der zuvor gespeicherten Verkehrsinformationen enthalten sind.

3. Verfahren nach Anspruch 1, wobei die Versionsinformationen der empfangenen Verkehrsinformationen oder der zuvor gespeicherten Verkehrsinformationen in einem Dienstkomponentenrahmen der empfangenen Verkehrsinformationen oder der zuvor gespeicherten Verkehrsinformationen enthalten sind.

4. Verfahren nach Anspruch 3, wobei die Indexinformationen der empfangenen Verkehrsinformationen oder der zuvor gespeicherten Verkehrsinformationen in einem Dienstkomponentenrahmen der empfangenen Verkehrsinformationen oder der zuvor gespeicherten Verkehrsinformationen enthalten sind.

5. Verfahren nach Anspruch 3, wobei die Dienstkomponente ferner mindestens eine Stau- und Reisezeitinformationsmeldung enthält.

6. Verfahren nach Anspruch 5, wobei die Stau- und Reisezeitinformationsmeldung Standortinformationen entsprechend den Stau- und Reisezeitinformationen enthält.

7. Verfahren nach Anspruch 6, wobei die Standortinformationen Verknüpfungsinformationen entsprechend den Indexinformationen enthalten.

8. Endgerät zum Empfangen von Verkehrsinformationen, wobei das Endgerät umfasst:
ein Sendemodul (510), das für den Empfang der Verkehrsinformationen, die mindestens einen Dienstkomponentenrahmen enthalten, konfiguriert ist;
eine Speichereinheit (550), die zum Speichern der empfangenen Verkehrsinformationen konfiguriert ist;
einen Decodierer, der zum Decodieren der Verkehrsinformationen konfiguriert ist; und
eine Steuereinheit (540), die konfiguriert ist
zum Empfangen der Verkehrsinformationen über das Sendemodul (510),
zum Extrahieren eines Dienstkomponentenrahmens, der Indexinformationen enthält, die identisch zu Indexinformationen eines des mindestens einen Dienstkomponentenrahmens sind, der in den zuvor gespeicherten Verkehrsinformationen enthalten ist,
zum Bestimmen, ob Versionsinformationen des extrahierten Dienstkomponentenrahmens identisch sind zu Versionsinformationen des Dienstkomponentenrahmens, der die zu dem extrahierten Dienstkomponentenrahmen identischen Indexinformationen aufweist, und
zum Decodieren desjenigen Dienstkomponentenrahmens mit den Indexinformationen, die identisch sind zu dem extrahierten Dienstkomponentenrahmen, aus dem mindestens einen Dienstkomponentenrahmen, der in den empfangenen Verkehrsinformationen enthalten ist, falls die Versionsinformationen des extrahierten Dienstkomponentenrahmens nicht identisch zu den Versionsinformationen des Dienstkomponentenrahmens mit den zu dem extrahierten Dienstkomponentenrahmen identischen Indexinformationen sind.

9. Endgerät nach Anspruch 8, wobei die Versionsinformationen der empfangenen Verkehrsinformationen oder der zuvor gespeicherten Verkehrsinformationen in einem Transportrahmen der empfangenen Verkehrsinformationen oder der zuvor gespeicherten Verkehrsinformationen enthalten sind.

10. Endgerät nach Anspruch 8, wobei die Versionsinformationen der empfangenen Verkehrsinformationen oder der zuvor gespeicherten Verkehrsinformationen in einem Dienstkomponentenrahmen der empfangenen Verkehrsinformationen oder der zuvor gespeicherten Verkehrsinformationen enthalten sind.

11. Endgerät nach Anspruch 10, wobei die Indexinformationen der empfangenen Verkehrsinformationen oder der zuvor gespeicherten Verkehrsinformationen im Dienstkomponentenrahmen der empfangenen Verkehrsinformationen oder der zuvor gespeicherten Verkehrsinformationen enthalten sind.

12. Endgerät nach Anspruch 10, wobei der Dienstkomponentenrahmen mindestens eine Stau- und Reisezeitinformationsmeldung enthält.

13. Endgerät nach Anspruch 12, wobei die Stau- und Reisezeitinformationsmeldung Standortinformationen entsprechend der Stau- und Reisezeitinformationen enthält.

14. Endgerät nach Anspruch 13, wobei die Standortinformationen Verknüpfungsinformationen entsprechend den Indexinformationen enthalten.

15. Verfahren zum Bereitstellen von Verkehrsinformationen, wobei das Verfahren umfasst:
Erzeugen mindestens einer Verkehrsinformationsmeldung;
Erzeugen mindestens eines Dienstkomponentenrahmens, der die mindestens eine Verkehrsinformationsmeldung enthält; und
Erzeugen von Verkehrsinformationen, die einen Transportrahmen enthalten, der den mindestens einen Dienstkomponentenrahmen enthält,
wobei jeder des mindestens einen Dienstkomponentenrahmens Versionsinformationen enthält, die eine Version des entsprechenden Dienstkomponentenrahmens angeben, und Indexinformationen, die mindestens einen im entsprechenden Dienstkomponentenrahmen enthaltene Verknüpfung angeben.

16. Verfahren nach Anspruch 15, wobei die Versionsinformationen im Transportrahmen enthalten sind.

17. Verfahren nach Anspruch 15, wobei jeder des mindestens einen Dienstkomponentenrahmens eine Stau- und Reisezeitinformationsmeldung enthält.

## Revendications

1. Procédé de réception d'information de trafic, le procédé comprenant :
la réception de l'information de trafic incluant au moins une trame de composant de service ;
l'extraction, d'au moins une trame de composant de service incluse dans une information de trafic antérieurement stockée, d'une trame de composant de service incluant une information d'index qui est identique à une information d'index de l'une de l'au moins une trame de composant de service incluse dans l'information de trafic reçue ;
la détermination si l'information de version de la trame de composant de service extraite est identique à une information de version de la trame de composant de service avec l'information d'index identique à la trame de composant de service extraite ; et
le décodage de la trame de composant de service avec l'information d'index identique à la trame de composant de service extraite parmi l'au moins une trame de composant de service incluse dans l'information de trafic reçue si l'information de version de la trame de composant de service extraite n'est pas identique à l'information de version de trame de composant de service avec l'information d'index identique à la trame de composant de service extraite.

2. Procédé selon la revendication 1, dans lequel l'information de version de l'information de trafic reçue ou de l'information de trafic antérieurement stockée est incluse dans une trame de transport de l'information de trafic reçue ou de l'information de trafic antérieurement stockée.

3. Procédé selon la revendication 1, dans lequel l'information de version de l'information de trafic reçue ou de l'information de trafic antérieurement stockée est incluse dans une trame de composant de service de l'information de trafic reçue ou de l'information de trafic antérieurement stockée.

4. Procédé selon la revendication 3, dans lequel l'information d'index de l'information de trafic reçue ou de l'information de trafic antérieurement stockée est incluse dans une trame de composant de service de l'information de trafic reçue ou de l'information de trafic antérieurement stockée.

5. Procédé selon la revendication 3, dans lequel le composant de service inclut en outre au moins un message d'information de congestion et de durée d'acheminement (CTT).

6. Procédé selon la revendication 5, dans lequel le message d'information de congestion et de durée d'acheminement inclut une information de localisation correspondant au CTT.

7. Procédé selon la revendication 6, dans lequel l'information de localisation inclut une information de liaison correspondant à une information d'index.

8. Terminal pour recevoir une information de trafic, le terminal comprenant :
un module de diffusion (510) configuré pour recevoir l'information de trafic incluant au moins une trame de composant de service ;
une unité de stockage (550) configurée pour stocker l'information de trafic reçue ;
un décodeur configuré pour décoder l'information de trafic ; et
une unité de commande (540) configurée pour recevoir l'information de trafic par l'intermédiaire du module de diffusion (510), extraire une trame de composant de service qui inclut une information d'index qui est identique à une information d'index de l'une de l'au moins une trame de composant de service incluse dans l'information de trafic antérieurement stockée, déterminer si l'information de version de la trame de composant de service extraite est identique à l'information de version de la trame de composant de service avec l'information d'index identique à la trame de composant de service extraite, et décoder la trame de composant de service avec l'information d'index identique à la trame de composant de service extraite parmi l'au moins une trame de composant de service incluse dans l'information de trafic reçue si l'information de version de la trame de composant de service extraite n'est pas identique à l'information de version de la trame de composant de service avec l'information d'index identique à la trame de composant de service extraite.

9. Terminal selon la revendication 8, dans lequel l'information de version de l'information de trafic reçue ou de l'information de trafic antérieurement stockée est incluse dans une trame de transport de l'information de trafic reçue ou de l'information de trafic antérieurement stockée.

10. Terminal selon la revendication 8, dans lequel l'information de version de l'information de trafic reçue ou de l'information de trafic antérieurement stockée est incluse dans un composant de service de l'information de trafic reçue ou de l'information de trafic antérieurement stockée.

11. Terminal selon la revendication 10, dans lequel l'information d'index de l'information de trafic reçue ou de l'information de trafic antérieurement stockée est incluse dans la trame de composant de service de l'information de trafic reçue ou de l'information de trafic antérieurement stockée.

12. Terminal selon la revendication 10, dans lequel la trame de composant de service inclut au moins un message d'information de congestion et de durée d'acheminement (CTT).

13. Terminal selon la revendication 12, dans lequel le message CTT inclut une information de localisation correspondant au CTT.

14. Terminal selon la revendication 13, dans lequel l'information de localisation inclut une information de liaison correspondant à une information d'index.

15. Procédé de délivrance d'une information de trafic, le procédé comprenant :
la génération d'au moins un message d'information de trafic ;
la génération d'au moins une trame de composant de service incluant l'au moins un message d'information de trafic ; et
la génération d'une information de trafic incluant une trame de transport incluant l'au moins une trame de composant de service,
dans lequel chacune de l'au moins une trame de composant de service inclut une information de version indiquant une version du composant de service correspondant et une information d'index indiquant au moins une liaison incluse dans la trame de composant de service correspondante.

16. Procédé selon la revendication 15, dans lequel l'information de version est incluse dans la trame de transport.

17. Procédé selon la revendication 15, dans lequel chacune de l'au moins une trame de composant de service inclut un message d'information de congestion et de durée d'acheminement (CTT).
